# EUROPEAN PATENT APPLICATION

(11) **EP 2 428 870 A1**
(43) Date of publication of application: **14.03.2012**
(21) Application number: 11180613.9
(22) Date of filing: 08.09.2011
(51) Int. Cl.: G06F 3/01, G06K 9/00

(54) **Device and method for controlling gesture for mobile device**

(30) Priority: 13.09.2010 US 880282; 08.09.2011 KR 20110091118
(71) Applicant: SAMSUNG ELECTRONICS CO., LTD., Suwon-si Gyeonggi-do 442-742 (KR)
(72) Inventor: Rosen, Alex, 60972 Israel (IL); Oks, Eduard, 60972 Israel (IL)
(74) Representative: Jenkins, Richard Gavin

(57) **Abstract**

Provided is a device and method for controlling a gesture for a mobile device, in which a projector is controlled by a user's gesture. To this end, the device includes a camera for capturing a user's gesture, a gesture recognition core engine for analyzing a gesture frame captured by the camera, extracting a control command for a projector, and transmitting the extracted control command to the projector, and the projector for projecting a corresponding image according to the control command for the projector.

## Description

### BACKGROUND OF THE INVENTION

### Field of the Invention

The present invention relates to a device and method for controlling a gesture for a mobile device, and more particularly to, a device and method for controlling a gesture for a mobile device, in which a projector is controlled by a user's gesture.

### Description of the Related Art

Many devices are nowadays capable of connecting and exchanging data with mobile devices. As a result, it is now possible to integrate mobile devices as the controlling element of a system that operates such devices.

So far, the art has failed to provide useful applications of mobile devices to display control systems.

### SUMMARY OF THE INVENTION

Accordingly, an aspect of the present invention is to provide a device and method for controlling a gesture for a mobile device, in which functionality of the mobile device is used to provide an efficient control means for a particular device.

Another aspect of the present invention is to provide a device and method for controlling a gesture for a mobile device, in which a projector is controlled by a user's gesture.

According to an aspect of the present invention, there is provided a device for controlling a gesture for a mobile device. The device includes a camera for capturing a user's gesture, a gesture recognition core engine for analyzing a gesture frame captured by the camera, extracting a control command for a projector, and transmitting the extracted control command to the projector, and the projector for projecting a corresponding image according to the control command for the projector.

According to another aspect of the present invention, there is provided a method for controlling a gesture for a mobile device. The method includes capturing a user's gesture and analyzing a captured gesture frame, extracting a control command for a projector, and transmitting the extracted control command to the projector.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1 is a diagram for describing a projector control operation of a mobile phone including a camera and a projector according to an embodiment of the invention;
FIG. 2 is a diagram for describing that a mobile phone is situated on a place where a projector can be controlled by user hand gestures, according to an embodiment of the present invention;
FIG 3 is a diagram for describing an operation in which a user controls a projector to move a picture in a mobile phone, according to an embodiment of the present invention;
FIG 4 is a diagram for describing gestures which are viewed differently according to different illumination conditions in a preview of a camera in a mobile phone, according to an embodiment of the present invention;
FIG 5 shows graphs for describing waveforms generated by frames including hand's gestures input through a camera in a mobile phone, according to an embodiment of the present invention;
FIG 6 is a graph for describing waveforms generated by a plurality of frames including hand's gestures consecutively input through a camera in a mobile phone, according to an embodiment of the present invention;
FIG 7 shows graphs for showing positions of centers of mass for frames input through a camera in a mobile phone, according to an embodiment of the present invention;
FIG 8 shows graphs for showing filtered positions of centers of mass for frames input through a camera in a mobile phone, according to an embodiment of the present invention;
FIG 9 is a diagram showing an action recognized as a gesture in a mobile phone, according to an embodiment of the present invention; and
FIG 10 is a diagram showing a mechanism for deleting a background image in a mobile phone, according to an embodiment of the present invention.

### DETAILED DESCRIPTION OF THE EXEMPLARY EMBODIMENT

As will be appreciated by the skilled person the invention is not limited to be used with any particular device. However, for the purpose of illustration, in the detailed description, a mobile phone will be used as an example of a mobile device, and reference will be made to a projector at the device that is controlled by the mobile phone.

Mobile phones can incorporate a built-in projector (and, therefore, in the following example reference will be made to a projector incorporated into such a mobile phone. It is however understood by the skilled person, as will be further elaborated in the following description, that the invention can also be applied and used in the same manner when a projector is not integrated within the mobile phone.

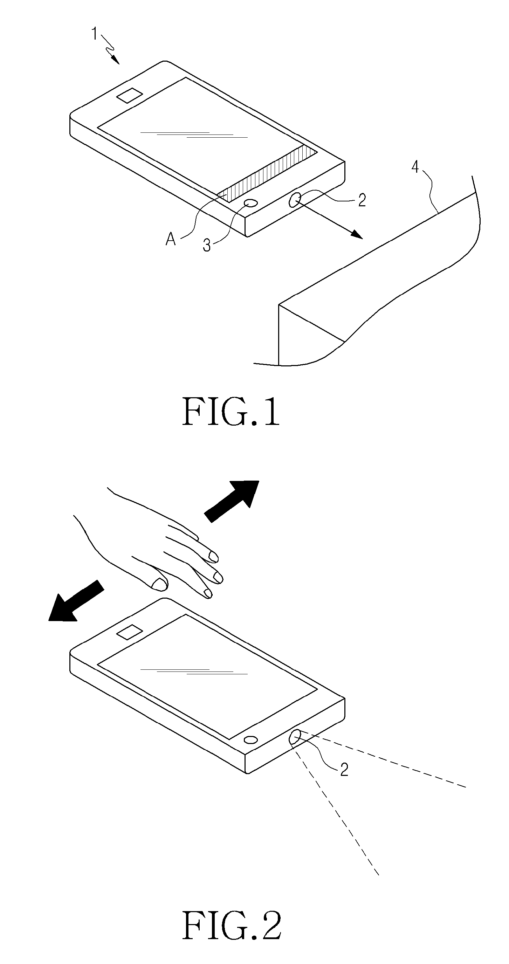

FIG 1 is diagram for describing a projector control operation of a mobile phone including a camera and a projector according to an embodiment of the invention.

Referring to FIG 1 a mobile phone 1 includes a projector 2 and a camera 3. The projector 2 is directed against a wall 4, onto which the image projected by the projector 2 will be displayed. When operating according to the invention, the mobile phone 1 is positioned such that the camera 3 is directed toward the presenter. As a result, the movements of the presenter's hands take place essentially on a plane A, i.e., above the mobile phone 1.

In another embodiment of the invention the camera 3 may be oriented in another direction so as to capture hand movements of the presenter, generated from the side of the mobile phone 1 and not above it. As will be appreciated by the skilled person the actual positioned relationship of the mobile phone camera and the presenter's hands may vary according to the setups.

FIG 2 is a diagram for describing that the mobile phone 1 is situated on a place where the projector 2 can be controlled by user hand gestures, according to an embodiment of the present invention. In FIG 2, the projector 2 is controlled by a hand gesture captured by the camera 3.

According to the invention the camera 3 captures the movement of the presenter's hands, which are translated into instructions for the projector 2. For instance, swiping the hand from right to left may mean "next slide", and from left to right may mean "previous slide".

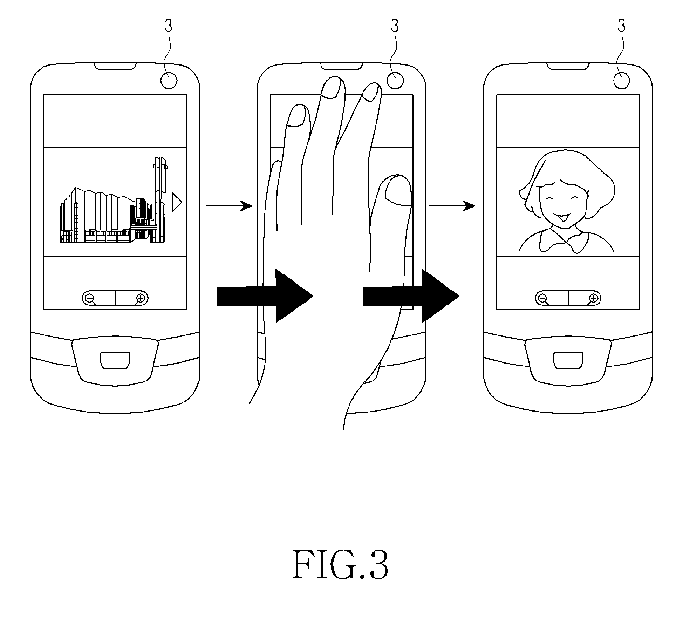

FIG 3 is a diagram for describing an operation in which a user controls the projector 2 to move a picture in the mobile phone 1, according to an embodiment of the present invention. As shown in FIG 3, if a hand's movement from left to right is captured by the camera 3, a projector control command "Previous Slide" is generated, such that an image corresponding to previous slide is displayed on a display unit of the mobile phone 1 and the image is projected through the projector 2.

An additional example is a movie player with virtual button controls. When a user wants to play a movie, he makes with his hands a gesture that is configured to be interpreted as a "Play" command. The camera 3 pointed to the user captures the user's movements and an algorithm engine analyzes the frames captured by the camera 3. The algorithm engine detects from the analyzed frames that the user made a gesture that is recognized as pressing a "Play" button with his hand, and retrieves the corresponding event for the movie player application. The movie player application then calls to initiate the playing of a movie.

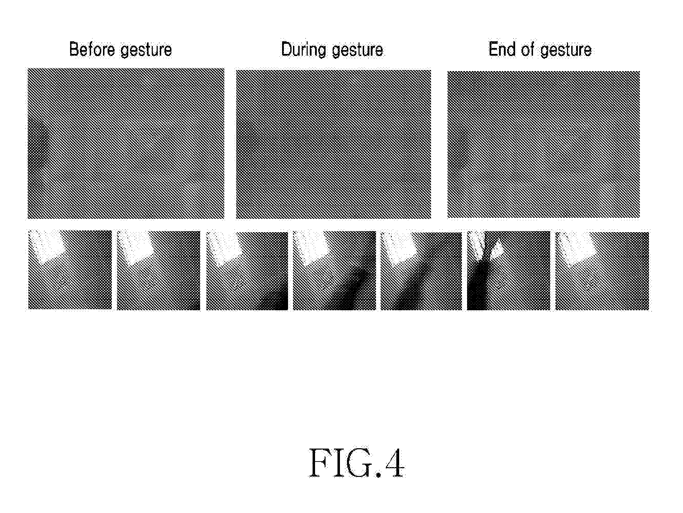

FIG. 4 is a diagram for describing gestures which are viewed differently according to different illumination conditions in a preview of the camera 3 in the mobile phone 1, according to an embodiment of the present invention.

As will be appreciated by the skilled person it is important to be able to capture and analyze images in poor light, particularly when operating a projector in relative darkness. This result is made possible by exploiting the capability of the mobile phone camera. The robust algorithm that performs gesture detection task well in poor lighting conditions is executed by filtering background noise and detecting the user's hand (or other object held by the user) and its movement pattern/direction. The detection is based on analyzing the one-dimensional signal pattern which is the integrated two-dimensional images in the direction orthogonal to the movement direction. The analysis of signal peaks will retain the gesture detection.

In order to recognize hand gestures in low light, in one embodiment of the invention the following procedures are performed:
1) The user moves his hand in front of the mobile phone's camera;
2) The camera captures the frames including the user's hand;
3) The captured frame is passed on to the gesture recognition core engine;
4) The minimum requirement for recognition is two sequential frames that contain a user's hand in them in order to determine the direction of movement;
5) The history ofN past frames is stored;
6) When a new frame arrives, it is analyzed and statistics are calculated, such as: average intensity values in each row and columns, and a center of mass of the frame by intensity;
7) The difference in the integral intensity values between two sequential frames is calculated. This calculation is parallel to subtracting the unchanging background in the frame;
8) The resulting signal of row and column intensity sum difference is calculated to find a significant peak location;
9) The peak should exceed an adaptive threshold on intensity, which is correlated to the illumination intensity;
10) A correspondence is sought in the direction of peak propagation and the size of the peaks in consecutive frames;
11) Calculate center of mass shift between frames;
12) Filter center of mass according to threshold and find local minimum;
13) Combine center of mass shift data from X and Y dimensions to detect gesture;
14) For detection with center of mass image blocks (2x2, 4x4) are tested independently;
15) Detect gesture starting and end point to reduce misdetections; and
16) If all the conditions are met, the gesture is recognized and reported.
   Detection of the gesture in Z axis (vertical)
17) Subtract background from the incoming frame
18) Calculate difference from background frame
19) Use dynamic threshold to detect center of mass shift

### Detection criteria:

1. |Sn-A|>D*EnvTh
2. |Sn|>BaseTh
3. Sn-Sn-1>Sth
Where,
Sn : CoM shift for Frame n
A : CoM shift average
D : Standart deviation of CoM shift
EnvTh : numeric threshold that depends on average frame intensity BaseTh : constant threshold (different for in gesture frames and out of gesture frames)
Sth : constant threshold for first derivation of the shift

### Direction estimation:

1) Compute center of mass global shifts
2) Analyze signal changes in center of mass during performing of gesture to determine type of gesture performed.
3) If there was signal change or the signal hasn't changed but the center of mass shift is above threshold it is Up/Down/Right or Left.
4) Else it is a gesture in Z dimension

### Features for gesture separation:

1) Center of mass shift signal
2) Total quadratic center of mass shift
3) Center of mass shift direction
4) Gesture duration
5) Number of similar frames
6) Contrast

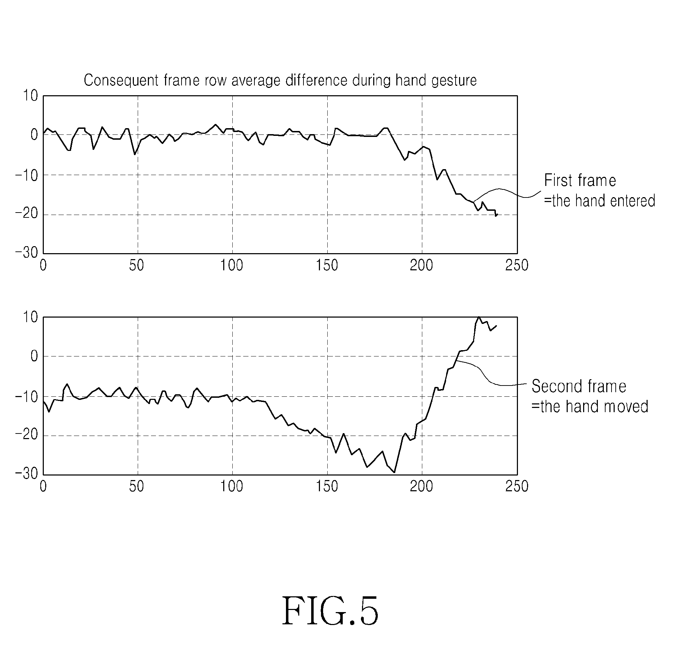

FIG 5 shows graphs for describing waveforms generated by frames including hand's gestures input through the camera 3 in the mobile phone 1, according to an embodiment of the present invention, in which the graphs show waveforms caused by hand gestures as they are calculated from the frames when the frames are analyzed in a one-dimensional space.

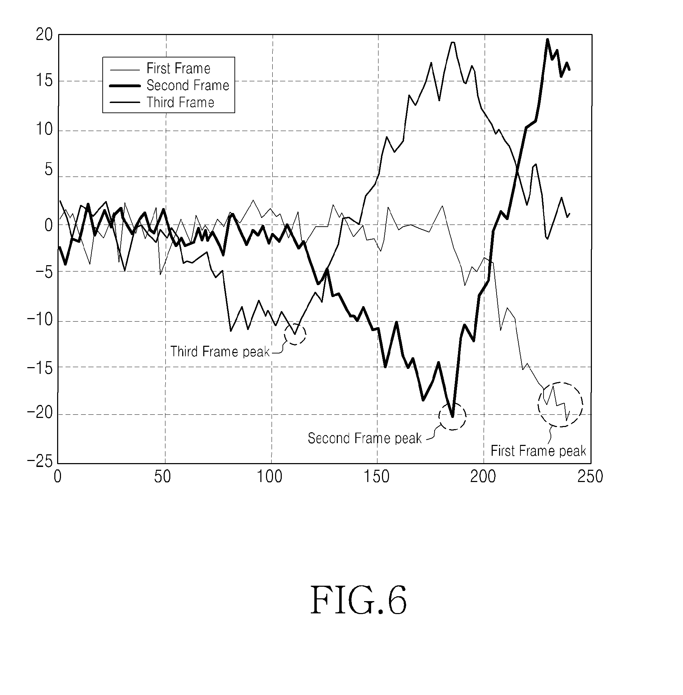

FIG 6 is a graph for describing waveforms generated by a plurality of frames including hand's gestures consecutively input through the camera 3 in the mobile phone 1, according to an embodiment of the present invention, in which the graph shows a plurality of frame waveforms caused by a hand gesture as calculated from the frames when the frames are analyzed in a one-dimensional space.

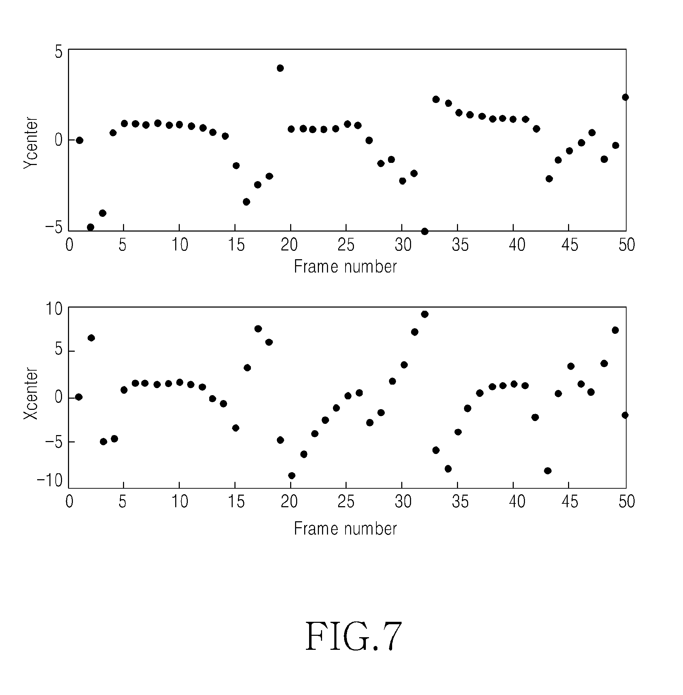

FIG 7 shows graphs for showing positions of centers of mass for frames input through the camera 3 in the mobile phone 1, according to an embodiment of the present invention, in which the graphs show positions of centers of mass on X and Y planes as a function of time and frames including input hand's gestures.

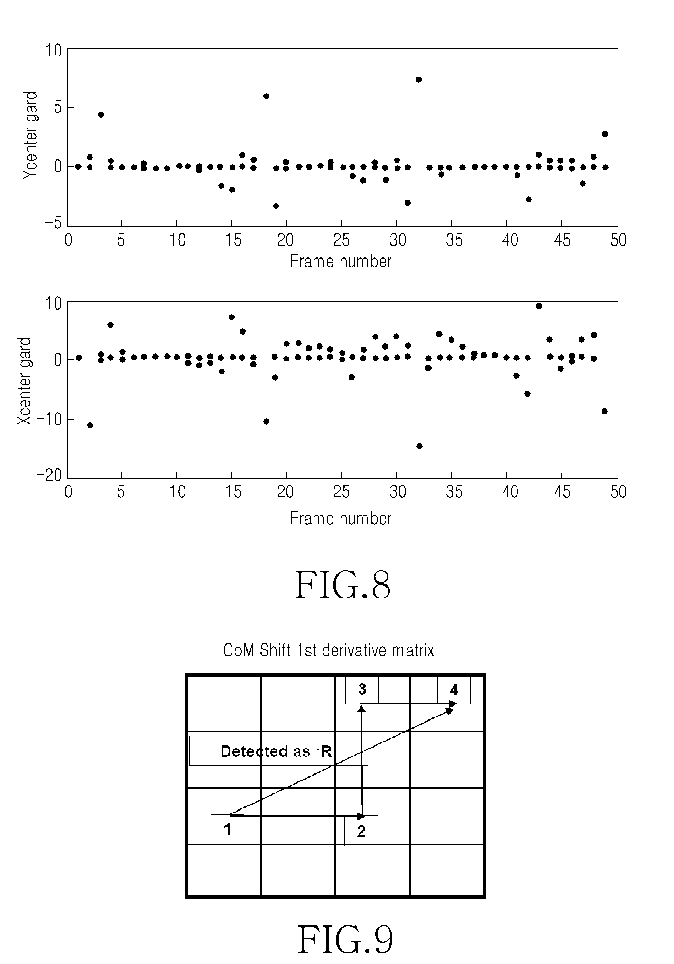

FIG 8 shows graphs for showing filtered positions of centers of mass for frames input through the camera 3 in the mobile phone 1, according to an embodiment of the present invention, in which the graphs show filtered positions of centers of mass after extraction of a local extreme value on the X and Y planes as a function of time and frames including input hand's gestures.
FIG 9 is a diagram showing an action recognized as a gesture in a mobile phone, according to an embodiment of the present invention, in which a shift of a center of mass on the X and Y planes is recognized as a gesture during recognition of a frame sequence.

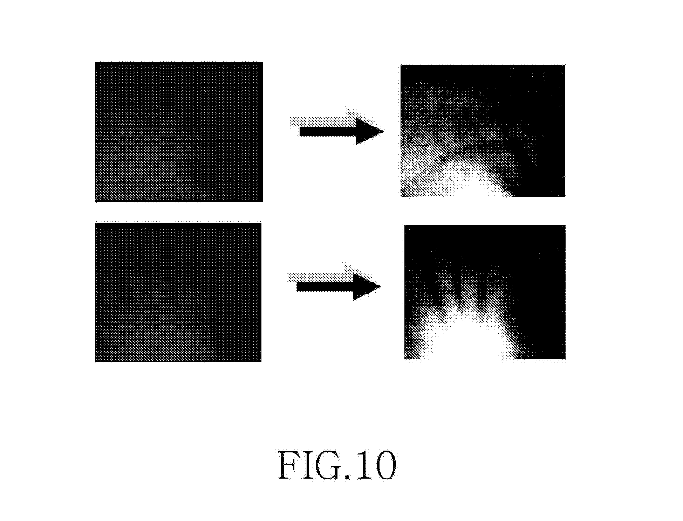

FIG 10 is a diagram showing a mechanism for deleting a background image in the mobile phone 1, according to an embodiment of the present invention, in which the mechanism for deleting the background image is used to enhance contrast in very low light conditions.

As will be appreciated by the skilled person the invention permits to control other equipment, such as for instance a standalone projector or a computer, as long as connectivity is established between the mobile phone and such equipment. For instance, connection between the mobile phone and equipment can be performed over WiFi, in which case the mobile phone operates as in the above example by "reading" the hand movements of the presenter, but then transmits appropriate commands to the external equipment over WiFi, instead of internally to a built-in device.

As can be seen from the foregoing description, by providing a device and method for controlling a gesture for a mobile device, it is possible to control a particular device (projector) incorporated in or separated from the mobile device merely with a user's gesture without direct manipulation in the mobile device.

The above examples and description have been provided for the purpose of illustration and are not intended to limit the invention in any way. Many different types of mobile devices (e.g., PDAs) provided with the camera can be used, in conjunction with any suitable built-in or external device, without exceeding the scope of the invention.

## Claims

1. A device for controlling a gesture for a mobile device, the device comprising:
a camera for capturing a user's gesture;
a gesture recognition core engine for analyzing a gesture frame captured by the camera, extracting a control command for a projector, and transmitting the extracted control command to the projector; and
the projector for projecting a corresponding image according to the control command for the projector.

2. The device of claim 1, wherein when the projector is a separate external device, the control command for the projector is transmitted through wireless communication.

3. The device of claim 1, wherein the user's gesture is a gesture caused by a user's hand movement.

4. The device of claim 1, wherein the gesture recognition core engine detects a shift of a center of mass between two sequential frames in which the user's gesture is captured, and extracts the control command for the projector corresponding to the user's gesture through the shift of the center of mass.

5. The device of claim 1, wherein the mobile device is a mobile phone.

6. A method for controlling a gesture for a mobile device, the method comprising:
capturing a user's gesture; and
analyzing a captured gesture frame, extracting a control command for a projector, and transmitting the extracted control command to the projector.

7. The method of claim 6, further comprising:
when the projector is a separate external device, transmitting the control command for the projector through wireless communication.

8. The method of claim 6, wherein the user's gesture is a gesture caused by a user's hand movement.

9. The method of claim 6, wherein the transmission to the projector comprises:
receiving two sequential frames in which the user's gesture is captured;
detecting a shift of a center of mass between the two sequential frames;
extracting the control command for the projector corresponding to the user's gesture through the shift of the center of mass; and
transmitting the extracted control command to the projector.

10. The method of claim 6, wherein the mobile device is a mobile phone.
